# EUROPEAN PATENT APPLICATION

(11) **EP 2 736 263 A1**
(43) Date of publication of application: **28.05.2014**
(21) Application number: 13194145.2
(22) Date of filing: 22.11.2013
(51) Int. Cl.: H04N 21/242, H04N 21/41, H04N 21/43, H04N 21/436, H04N 21/8547, H04N 21/6587, H04N 5/04, H04N 21/2387

(54) **Server, multimedia apparatus and control method thereof for synchronously playing multimedia contents through a plurality of multimedia devices**

(30) Priority: 23.11.2012 CN 201210480896; 01.11.2013 KR 20130131964
(71) Applicant: Samsung Electronics Co., Ltd, Gyeonggi-do 443-742 (KR); Samsung Electronics (China) R&D Center, Nanjing (CN)
(72) Inventor: Liu, Yang, Nanjing (CN); Sun, Chunhong, Nanjing (CN); Zhu, Chunbo, Nanjing (CN)
(74) Representative: Brandon, Paul Laurence

(57) **Abstract**

Apparatuses and methods related to a server, a multimedia apparatus and a control method thereof, are provided. More particularly, the apparatuses and methods relate to a server, a multimedia apparatus and a control method thereof which synchronously plays multimedia contents through a plurality of multimedia apparatuses. A multimedia apparatus includes: a communicator configured to be connected to a server; and a controller configured to transmit to the server a request to start playing a multimedia content, receive synchronization information from the server that is necessary for synchronously playing the multimedia content. The synchronization information from the server is determined on the basis of the play start request, and synchronously plays the multimedia content based on the received synchronization information.

## Description

### BACKGROUND

### Field

Apparatuses and methods consistent with the exemplary embodiments relate to a server, a multimedia apparatus and a control method thereof, and more particularly, to a server, a multimedia apparatus and a control method thereof which synchronously plays multimedia contents through a plurality of multimedia apparatuses.

### Description of the Related Art

Existing embedded multimedia apparatuses have media players therein, and the most important part of such media players is an audio/video (A/V) synchronization engine. To enable the multimedia apparatuses to synchronously play multimedia contents, both interactive control and clock control must be added to synchronously play multimedia contents by multimedia apparatuses during synchronous control of an A/V synchronization engine.

The existing synchronous play technology of multimedia apparatuses has the following defects:
Most of A/V synchronization engines of embedded multimedia apparatuses use a system clock of local apparatuses, and such system clocks may be different. Accordingly, clocks of a plurality of multimedia apparatuses are not consistent with each other and thus multimedia apparatuses may not synchronously and accurately play multimedia contents.

If a plurality of multimedia apparatuses is intended to play and if one of the multimedia apparatuses is manipulated, the remaining multimedia apparatuses may not synchronously respond and the manipulation may not synchronously performed.

### SUMMARY

One or more exemplary embodiments provide a server, a multimedia apparatus and a control method thereof which is capable of improving the degree of accuracy in synchronously playing multimedia contents by a plurality of multimedia apparatuses.

According to an aspect of an exemplary embodiment, there is provided method of controlling a server, the method comprising: receiving from one of a plurality of multimedia apparatuses a request to start playing a multimedia content; determining synchronization information necessary to synchronously play the multimedia content between the plurality of multimedia apparatuses, based on a system clock of the server; and transmitting the determined synchronization information which corresponds to the system clock to the plurality of multimedia apparatuses.

The transmitting the determined synchronization information to the plurality of multimedia apparatuses may comprise periodically transmitting the synchronization information that is determined, on the basis of the system clock.

The method may further comprise, in response one of the plurality of multimedia apparatuses being late in playing the multimedia content, receiving a late time and adjusting the system clock based on the late time.

The method may further comprise, in response to one of the plurality of multimedia apparatuses pausing while playing the multimedia content, receiving a paused time and adjusting the system clock based on the paused time.

The method may further comprise, in response to one of the plurality of multimedia apparatuses starting the playing of the multimedia content after a pause, receiving a play start time and adjusting the system clock based on the received play start time.

The method may further comprise, in response to one of the plurality of multimedia apparatuses skipping the multimedia content, receiving a skip time and adjusting the system clock based on the received skip time.

The method may further comprise, in response to one of the plurality of multimedia apparatuses stopping the playing of the multimedia content, receiving a request to stop playing and stopping play of the multimedia content according to the received stop request.

According to an aspect of another exemplary embodiment, there is provided a server including: a communicator configured to be connected to a plurality of multimedia apparatuses; and a controller configured to receive a request from one of the plurality of multimedia apparatuses to start playing a multimedia content, determine synchronization information necessary for synchronously playing the multimedia content between the plurality of multimedia apparatuses, based on a system clock of the server, and transmit to the plurality of multimedia apparatuses the determined synchronization information which corresponds to the system clock.

The controller may be configured to periodically transmit to the plurality of multimedia apparatuses the synchronization information that is determined on the basis of the system clock.

In response to one of the plurality of multimedia apparatuses being late in playing a multimedia content, the controller may be configured to receive a late time and adjust the system clock based on the received late time.

In response to one of the plurality of multimedia apparatuses pausing the playing of the multimedia content, the controller may be configured to receive a paused time and adjusts the system clock based on the received paused time.

In response to one of the plurality of multimedia apparatuses starting playing the multimedia content after a pause, the controller may be configured to receive a play start time and adjust the system clock based on the received play start time.

In response to one of the plurality of multimedia apparatuses skipping a multimedia content, the controller may be configured to receive a skip time and adjust the system clock based on the received skip time.

In response to one of the plurality of multimedia apparatuses stopping the playing of the multimedia content, the controller may be configured to receive a request for stopping the playing of the multimedia content and stops playing the multimedia content according to the received stop request.

According to an aspect of another exemplary embodiment, there is provided a method of controlling a multimedia apparatus comprising: transmitting to the server a request to start playing a multimedia content; receiving from the server synchronization information that is necessary for synchronously playing the multimedia content and determined on the basis of the system clock to correspond to the request for starting playing the multimedia content; and synchronously playing the multimedia content based on the received synchronization information.

The receiving the synchronization information from the server may comprise periodically receiving the synchronization information that is determined on the basis of the system clock of the server.

The method may be provided further comprising, in response to the playing of the multimedia content being late, transmitting a late time to the server.

The method may further comprise, in response to there being a pause in playing the multimedia content, transmitting a paused time to the server.

The method may further comprise, in response to the multimedia content starting play after a pause, transmitting a play start time to the server.

The method may further comprise, in response to the multimedia content being skipped, transmitting a skip time to the server.

The method may further comprise, in response to stopping of the playing of the multimedia content being played, transmitting a play stop request to the server.

According to an aspect of another exemplary embodiment, there is provided a multimedia apparatus comprising: a communicator configured to be connected to a server; and a controller configured to transmit to the server a request to start playing a multimedia content, receive from the server synchronization information that is necessary to synchronously play the multimedia content and determined on the basis of the play start request, and synchronously plays the multimedia content based on the received synchronization information.

The controller may periodically receive the synchronization information that is determined on the basis of the system clock of the server.

In response to a playing of the multimedia content being late, the controller may be configured to transmit a late time to the server.

In response to there being a pause in playing the multimedia content, the controller may be configured to transmit a paused time to the server.

In response to the multimedia content starting play after a pause, the controller may transmit a play start time to the server.

In response to the multimedia content being skipped, the controller may transmit a skip time to the server.

In response to stopping the multimedia content being played, the controller may transmit a play stop request to the server.

According to an aspect of another exemplary embodiment may provide a multimedia system including: a server configured to synchronize information that is necessary for synchronously playing multimedia content requested by a plurality of multimedia apparatuses; a communicator configured to be connected to the server; and a controller configured to transmit to the server a request from a multimedia apparatus to start playing a multimedia content, and to receive synchronized content from the server for playing content on the multimedia apparatuses; wherein the multimedia apparatuses are configured to synchronously play the multimedia content based on synchronization information transmitted from the server to the controller.

The synchronization information necessary for synchronously playing the multimedia content between the plurality of multimedia apparatuses may be determined based on a system clock of the server.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a flowchart showing a method of synchronously playing a multimedia file by multimedia apparatuses, according to an exemplary embodiment;
FIG. 2 is a flowchart showing a method of synchronously pausing by the multimedia apparatuses, according to an exemplary embodiment;
FIG. 3 is a flowchart showing a method of synchronously enabling by the multimedia apparatuses according to an exemplary embodiment;
FIG. 4 is a flowchart showing a method of synchronously skipping by the multimedia apparatuses, according to an exemplary embodiment;
FIG. 5 is a flowchart showing a method of synchronously fast-forwarding and rewinding by the multimedia apparatuses, according to an exemplary embodiment;
FIG. 6 is a flowchart showing a method of synchronously stopping playing by the multimedia apparatuses, according to an exemplary embodiment;
FIG. 7 is a flowchart showing a method of resolving an abnormal situation that occurs during a playing process, according to an exemplary embodiment;
FIG. 8 is a flowchart showing a method of examining synchronization during the playing process, according to an exemplary embodiment;
FIG. 9 is a block diagram of a synchronous playing server, according to an exemplary embodiment; and
FIG. 10 is a block diagram of the multimedia apparatus, according to embodiment.
FIG. 11 is a block diagram of a server according to an exemplary embodiment.
FIG. 12 is a block diagram of a multimedia apparatus according to an exemplary embodiment.
FIG. 13 is a flowchart showing a control method of controlling the server, according to an exemplary embodiment.
FIG. 14 is a flowchart showing a control method of controlling the multimedia apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

Firstly, a network environment according to an exemplary embodiment will be explained.

A plurality of multimedia apparatuses is connected to the same internal network, which may be a LAN at home or at work, or an internal network to which the multimedia apparatuses are directly connected without any arrangement. A network exchanger supports the Internet Group Management Protocol (IGMP).

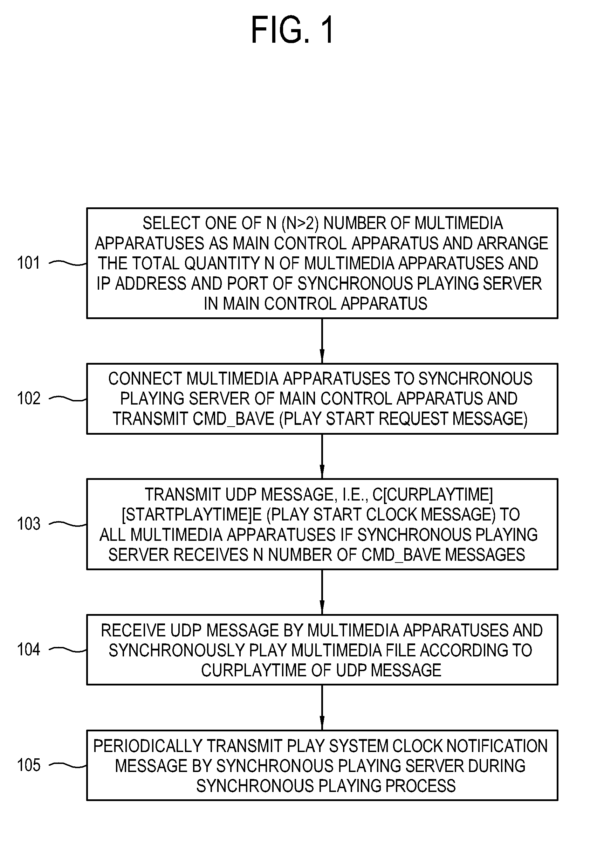

FIG. 1 is a flowchart showing a method of synchronously playing a multimedia file by multimedia apparatuses according to the exemplary embodiment.

In operation 101,one of N (N≥2) multimedia apparatuses is selected as a main control apparatus, and the N number of multimedia apparatuses is arranged in the main control apparatus. Operation variables of a synchronous playing server in the main control apparatus, i.e., a unicast Internet Protocol (IP) address of the synchronous playing server, a unicast port of the synchronous playing server, a broadcast IP address of the synchronous playing server, and a broadcast port of the synchronous playing server are arranged. Simultaneously, the operation variables of the synchronous playing server in the main control apparatus, i.e., the unicast IP address of the synchronous playing server, the unicast port of the synchronous playing server, the broadcast IP address of the synchronous playing server and the broadcast port of the synchronous playing server in the main control apparatus are arranged in respective controlled multimedia apparatuses.

In operation 102, the respective multimedia apparatuses are connected to the synchronous playing server in the main control apparatus, and in response to the connection being successful, the respective multimedia apparatuses transmit a transmission control protocol (TCP) message, i.e., CMD_BAVE (play start request message) to the synchronous playing server.

The respective multimedia apparatuses are connected to the synchronous playing server by using the unicast IP address and port of the synchronous playing server.

In operation 103, in response to thesynchronous playing server receives the N number of CMD_BAVE messages, the synchronous playing server transmits a user datagram protocol (UDP) message, i.e., C[curPlayTime][startPlayTime]E (play start clock message).

curPlayTime refers to a current play time of a multimedia file, and startPlayTime refers to an initial play start time of the multimedia file and the value is normally 0.

One current play system clock curSysTick is maintained in the synchronous playing server. Simultaneously, the synchronous playing server records a play start system clock startPlayTick. That is, the synchronous playing server records a clock at the time when a multimedia file is initially played. In response to no abnormal situation such as a pause taking place during a synchronous playing process, curPlayTime = curSysTick - startPlayTick.

In operation 104, the respective multimedia apparatuses receive the UDP message and synchronously play the multimedia file according to curPlayTime of the UDP message.

In operation 105, during the synchronous playing process, the synchronous playing server periodically transmits a system clock notification message including curPlayTime and startPlayTime, through a UDP multicast.

The period may be one millisecond. A boundary of a system clock for audio and video synchronization of the multimedia apparatuses is generally 10 milliseconds, but is not limited thereto. In case of the UDP, there is a possibility of packet loss, but the respective multimedia apparatuses may play multimedia contents normally and such system clock is the same as a playing clock of local equipment. Accordingly, the plurality of multimedia apparatuses performs the same playing process.

In response to one of a plurality of multimedia apparatuses having audio or video that is late during the synchronous playing process, a TCP message, i.e., L[latetime]E (late synchronous playing message) is transmitted to the synchronous playing server. The synchronous playing server adjusts a current play system clock from curSysTick to curSysTick - latetime after receiving the latetime. The late time is a length of time of late audio or video in the multimedia apparatuses. Accordingly, even upon occurrence of the late audio or late video, the respective multimedia apparatuses may still synchronously play multimedia contents.

The multimedia apparatuses determine whether any late audio or video has occurred as follows.

The multimedia apparatuses compare a display time stamp of an audio frame or a video frame that is currently played, with curPlayTime that has been transmitted by the synchronous playing server. In response to the difference between the display time stamp and the curPlayTime being within a preset range, the multimedia apparatuses determine that no audio late or video late has occurred. In response to the difference between the display time stamp and the curPlayTime not being within the preset range, the multimedia apparatuses determine that an audio late or video late has occurred.

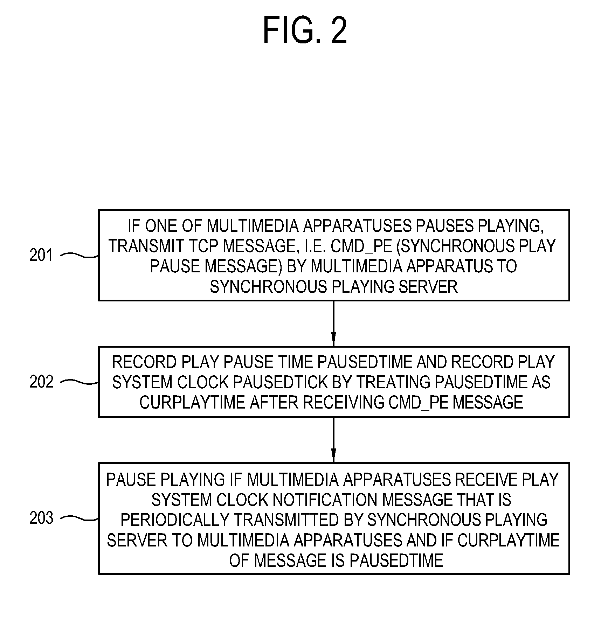

FIG. 2 is a flowchart showing a method of synchronously pausing play by the multimedia apparatuses, according to an exemplary embodiment.

In operation 201, in response to one of the plurality of multimedia apparatuses pausing while playing a multimedia content, the paused multimedia apparatus transmits a TCP message, i.e., CMD_PE (synchronous playing pause message) to the synchronous playing server.

In operation 202, the synchronous playing server records a play pause time pausedTime and records a play pause system clock pausedTick by treating pausedTime as curPlayTime after receiving the CMD_PE.

In operation 203, in response to the respective multimedia apparatuses receiving a play system clock notification message that is periodically transmitted by the synchronous playing server, the respective multimedia apparatuses pause playing a multimedia content in response to a determination that curPlayTime of the message is always pausedTime.

When pausedTime!=0 (i.e., pause), curPlayTime of the play system clock notification message that is periodically transmitted by the synchronous playing server is always pausedTime, and all of the respective multimedia apparatuses pause playing the multimedia content since curPlayTime does not change.

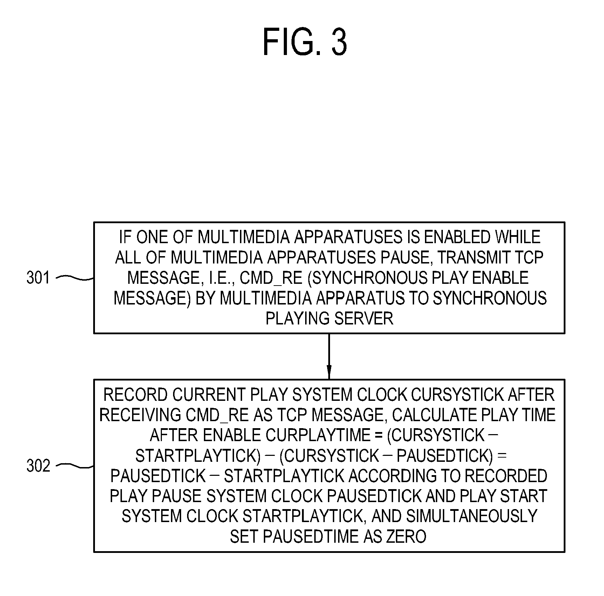

FIG. 3 is a flowchart showing a method of synchronously enabling the playing of multimedia content by the multimedia apparatuses according to an exemplary embodiment.

In operation 301, in response to one of the multimedia apparatuses being enabled while all of the multimedia apparatuses pause playing a multimedia content, the enabled multimedia apparatus transmits a TCP message, i.e., CMD_RE (a synchronous playing enable message) to the synchronous playing server.

In operation 302, after receiving the TCP message, i.e., CMD_RE, the synchronous playing server records a current play system clock curSysTick and calculates a play time after the enable message curPlayTime = (curSysTick - startPlayTick) - (curSysTick - pausedTick) = pausedTick - sta rtPlayTick according to the recorded play pause system clock pausedTick and a play start system clock startPlayTick, and simultaneously sets pausedTime as 0.

The fact that PausedTime = 0 means that the multimedia apparatuses are not in the pause state.

The curPlayTime of the play system clock notification message which is periodically transmitted by the synchronous playing server starts from pausedTick - startPlayTick, and as the system clock curSysTick increases continuously, the respective multimedia apparatuses start playing again.

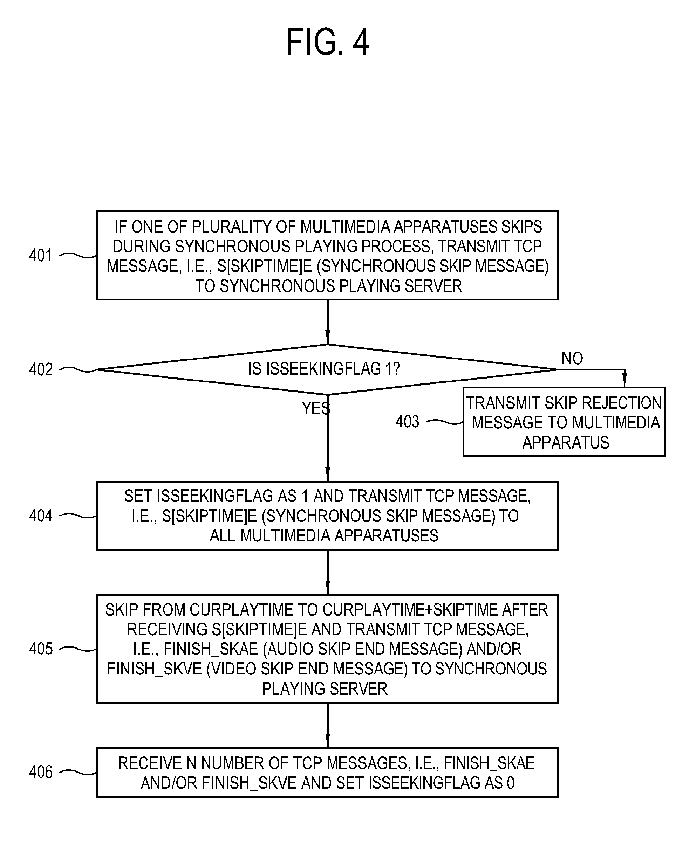

FIG. 4 is a flowchart showing a method of synchronously skipping content by the multimedia apparatuses, according to an exemplary embodiment.

In operation 401, in response to one of the plurality of multimedia apparatuses skipping during the synchronous playing process, the skipping multimedia apparatus transmits a TCP message S[skiptime]E (synchronous skip message) to the synchronous playing server. The skiptime refers to a length of synchronous skip time.

In operation 402, after receiving the S[skiptime]E as the TCP message, the synchronous playing server examines a skip value that is maintained by itself, i.e., isSeekingFlag and determines whether isSeekingFlag is set to 1. If isSeekingFlag is set to 1, operation 403 is performed. If isSeekingFlag is not set to 1, operation 404 is performed.

In operation 403, the synchronous playing server transmits a skip rejection message to the multimedia apparatuses and ends the process.

In response to isSeekingFlag being 1, this means that the previous synchronous skip process has not yet ended.

In operation 404, the synchronous playing server sets isSeekingFlag as 1, and transmits a TCP message, i.e., S[skiptime]E (synchronous skip message) to all multimedia apparatuses.

In operation 405, after receiving the S[skiptime]E, the respective multimedia apparatuses skip from the current play time curPlayTime to curPlayTime + skiptime, and play the multimedia content, and transmit a TCP message, i.e., FINISH_SKAE (audio search end message) and/or FINISH_SKVE (video search end message) to the synchronous playing server. Simultaneously, the synchronous playing server adjusts the current play time curPlayTime to curPlayTime + skiptime.

in operation 406, the synchronous playing server receives an N number of TCP messages, i.e., FINISH_SKAE and/or FINISH_SKVE and sets isSeekingFlag to 0 to thereby end the synchronous skip process.

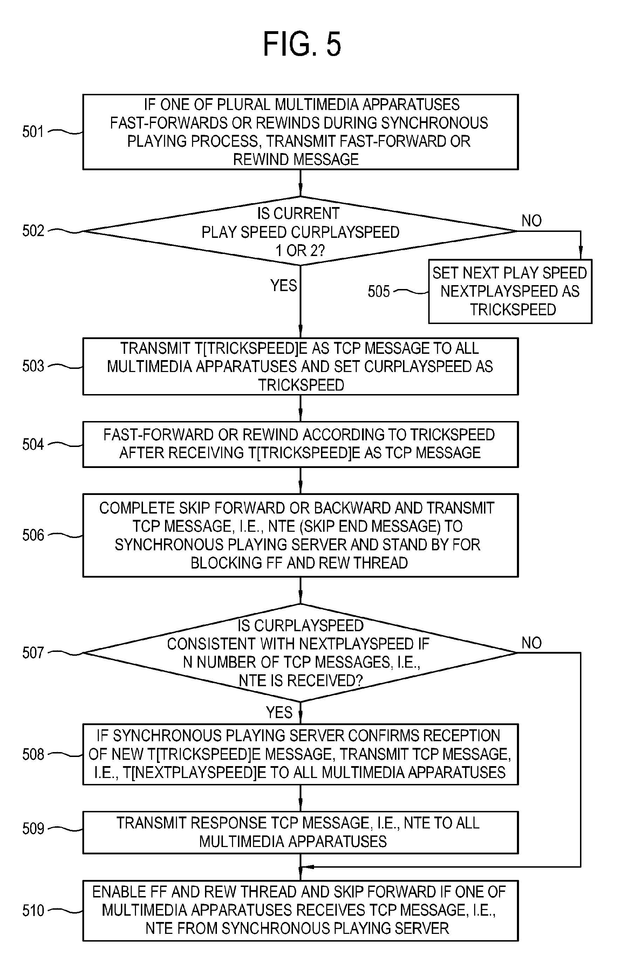

FIG. 5 is a flowchart showing a method of synchronously fast-forwarding and rewinding by the multimedia apparatuses, according to an exemplary embodiment.

In operation 501, in response to one of the plurality of multimedia apparatuses fast-forwarding (FF) or rewinding (REW) during the synchronous playing process, the fast-forwarding or rewinding multimedia apparatus transmits a TCP message, i.e., T[trickspeed]E (synchronous FF or REW message) to the synchronous playing server. The trickspeed refers to FF or REW speed.

In operation 502, after receiving T[trickspeed]E as the TCP message, the synchronous playing server determines whether a current play speed curPlaySpeed is 1 or 2. If the current play speed curPlaySpeed is 1 or 2, operation 503 is performed. If the current play speed curPlaySpeed is not 1 or 2, operation 505 is performed.

Generally, multimedia apparatuses have two types of normal playing states, one of which is curPlaySpeed = 1 and in such a case, the multimedia apparatus plays at a normal speed. The other one of the normal playing states is curPlaySpeed = 2 and the multimedia apparatus plays at two times normal speed.

In operation 503, the synchronous playing server transmits T[trickspeed]E as a TCP message to all multimedia apparatuses and sets curPlaySpeed as trickspeed.

In operation 504, after receiving the T[trickspeed]E as the TCP message, the respective multimedia apparatuses fast-forward or rewind according to the trickspeed and proceed with an operation 506.

Fast-forwarding or rewinding is performed by operating a fast-forward or rewind thread and skipping forward or backward one-time at a fixed time interval out of the fast-forward and rewind threads.

In operation 505, the synchronous playing server sets a next play speed nextPlaySpeed as trickspeed.

If the CurPlaySpeed is not 1 or 2, this means that the multimedia apparatuses have already fast-forwarded or rewound and the only need is to adjust the nextPlaySpeed to be trickspeed.

In operation 506, after completing skipping forward or backward one-time, one of the multimedia apparatuses transmits a TCP message, i.e., NTE (skip end message) to the synchronous playing server and stands by to block the fast-forward and rewind thread.

In operation 507, in response to the synchronous playing server receiving an N number of TCP messages, i.e., NTE, the server confirms the completion of the one-time skipping during the fast-forward or rewind process, and determines whether curPlaySpeed is consistent with nextPlaySpeed. In response to the curPlaySpeed being consistent with nextPlaySpeed, operation 508 is performed. In response to the curPlaySpeed not being consistent with nextPlaySpeed, operation 510 is performed.

In operation 508, in response to the synchronous playing server confirming that it has received a new T[trickspeed]E message, the synchronous player server transmits a TCP message, i.e., T[nextPlaySpeed]E (next play speed notification message) to all multimedia apparatuses. In this case, nextPlaySpeed equals trickspeed.

In operation 509, the synchronous playing server transmits a response TCP message, i.e., NTE to all multimedia apparatuses.

In operation 510, in response to one of the multimedia apparatuses receiving the TCP message from the synchronous playing server, the multimedia apparatus enables the fast-forward or rewind thread and skips forward.

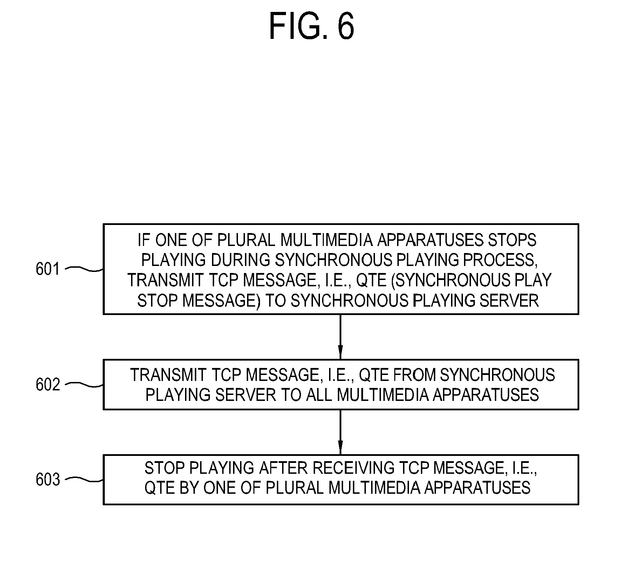

FIG. 6 is a flowchart showing a method of synchronously stopping play by the multimedia apparatuses, according to an exemplary embodiment.

In operation 601, in response to one of the plurality of multimedia apparatuses stopping play during the synchronous playing process, the stopping multimedia apparatus transmits a TCP message, i.e., QTE (synchronous play stop message) to the synchronous playing server.

In operation 602, the synchronous playing server receives and transmits the TCP message, i.e., the QTE to the respective multimedia apparatuses.

In operation 603, one of the multimedia apparatuses stops playing after receiving the TCP message, i.e., QTE.

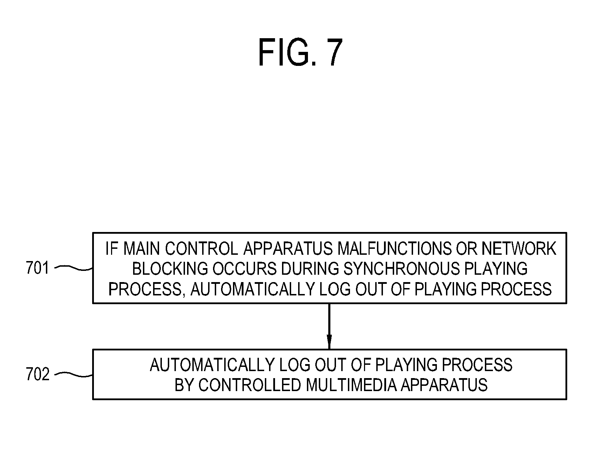

FIG. 7 is a flowchart showing a method of resolving an abnormal situation by the multimedia apparatuses during the playing process, according to an exemplary embodiment.

In operation 701, in response to a main control apparatus malfunctioning or a network being blocked during the synchronous playing process, the respective multimedia apparatuses may not receive a play system clock notification message that is periodically transmitted by the synchronous playing server, and thus may automatically log out of the playing process.

To resolve the foregoing situation, the network environment is rearranged and the main control apparatus and the synchronous playing server are operated.

In operation 702, in response to the occurrence of a network block with respect to a controlled multimedia apparatus during the synchronous playing process, the controlled multimedia apparatus may not receive the play system clock notification message that is periodically transmitted by the synchronous playing server, and thus may automatically log out of the playing process.

After the network environment of the controlled multimedia apparatus is arranged, the multimedia apparatus is rebooted to play and skips forward according to a current play time curPlayTime that is transmitted by the synchronous playing server through a latest play system clock notification message. A length of the skip time is curPlayTime + a, and after the skipping, the following is performed.
1) A current play time curPlayTime1 of the controlled multimedia apparatus is compared to a current play time curPlayTime of the synchronous playing server.
2) In response to the curPlayTime1 + 10≤curPlayTime2 comparison, the controlled multimedia apparatus skips forward according to the curPlayTime2. A length of the skip time is curPlayTime2 + a in terms of seconds, and after the skipping, the operation is performed as set forth in paragraph 1) above.
3) In response to curPlayTime1 < curPlayTime < curPlayTime1 + 10, the controlled multimedia apparatus transmits a TCP message, i.e., L[latetime]E, latetime = curPlayTime2 - curPlayTime1 to the synchronous playing server to thereby end the process.
4) In response to curPlayTimel≥curPlayTime2, the controlled multimedia apparatus stands by for curPlayTime1 - curPlayTime2 and then plays again to thereby end the process.

In the foregoing process, 3≤a≤10 and more preferably a equals 5 (seconds).

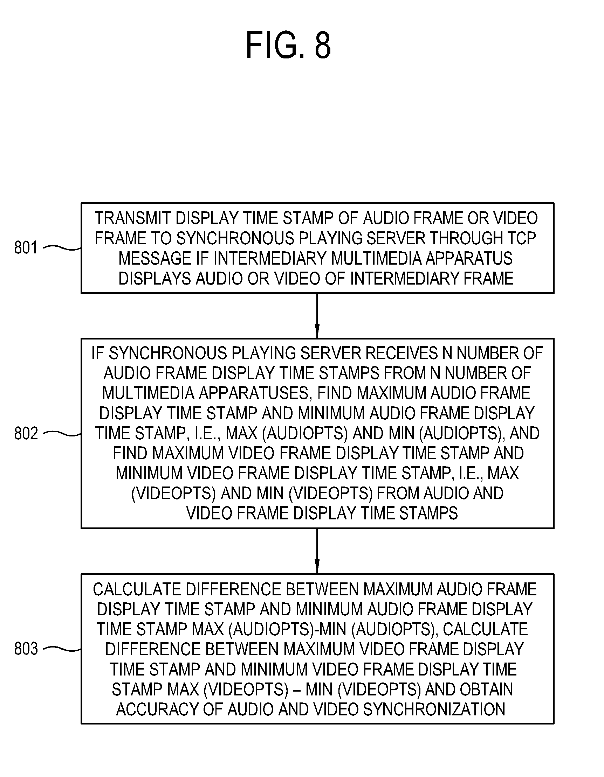

FIG. 8 is a flowchart which shows a method of examining synchronization during the playing process according to an exemplary embodiment.

In operation 801, an intermediary multimedia apparatus transmits a display time stamp of an audio frame or a video frame to the synchronous playing server through a TCP message before displaying an audio or video of an intermediary frame.

With respect to the audio frame, the transmitted TCP message is APTS[audioPTS]E (audio display time stamp message), and audioPTS of the TCP message refers to a display time stamp of the audio frame. With respect to the video frame, the transmitted TCP message is VPTS[videoPTS]E (video display time stamp message), and videoPTS of the TCP message refers to a display time stamp of the video frame.

In operation 802, in response to the synchronous playing server receiving an N number of audio frame display time stamps, i.e., audioPTS-1, audioPTS-2, ..., and audioPTS-N, and an N number of video frame display time stamps, i.e., videoPTS-1, videoPTS-2, ..., and videoPTS-N from the N number of multimedia apparatuses, the synchronous playing server finds a maximum audio frame display time stamp and a minimum audio frame display time stamp, i.e., MAX(audioPTS) and MIN(audioPTS) from among the audio frame display time stamps, and finds a maximum video frame display time stamp and a minimum video frame display time stamp, i.e., MAX(videoPTS) and MIN(videoPTS) from among the video frame display time stamps.

In operation 803, the synchronous playing server calculates MAX(audioPTS)-MIN(audioPTS) as a difference between the maximum audio frame display time stamp and the minimum audio frame display time stamp, and calculates MAX(videoPTS)-MIN(videoPTS) as a difference between the maximum video frame display time stamp and the minimum video frame display time stamp in order to obtain accuracy of audio/video synchronization.

In practice, based on the test result of synchronization of 8 multimedia apparatuses during a synchronous playing process, audioPTS-MAX - audioPTS-MIN < 5milliseconds and videoPTS-MAX - videoPTS-MIN < 5 milliseconds.

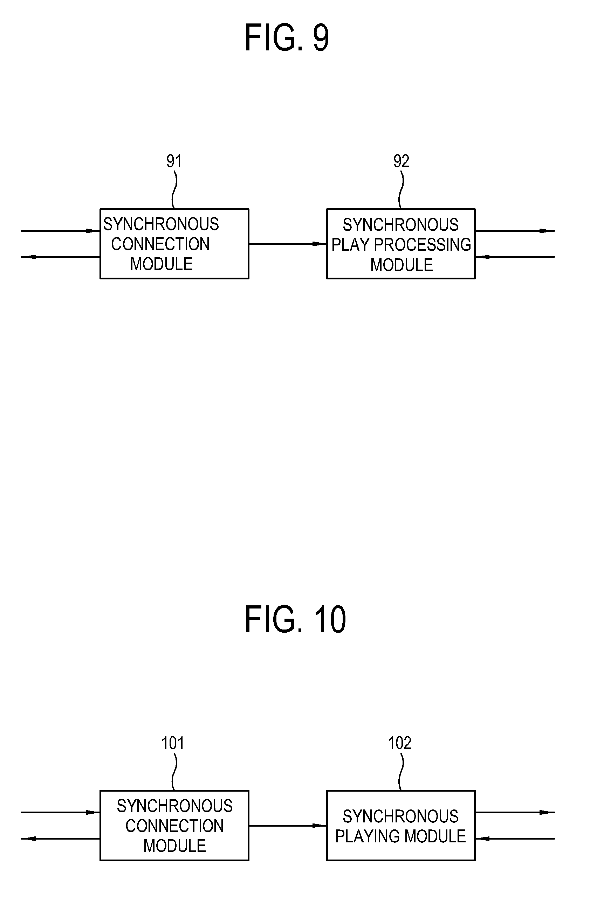

FIG. 9 is a block diagram of the synchronous playing server, according to an exemplary embodiment. The synchronous playing server is located in a main control apparatus, which has been selected from a plurality of multimedia apparatuses. As shown therein, the synchronous playing server includes a synchronous connection module 91 and a synchronous play processing module 92. The synchronous connection module 91 is connected to multimedia apparatuses and after being successfully connected thereto, transmits a connection completion message to the synchronous play processing module 92.

The synchronous play processing module 92 receives the connection completion message from the synchronous connection module 91. In response to the synchronous play processing module 92 receiving a play start request message from all of the multimedia apparatuses, the synchronous play processing module 92 confirms a current play time curPlayTime according to a current play system clock curSysTick that is maintained on its own, and transmits a play start clock message including curPlayTime to all of the multimedia apparatuses so that the respective multimedia apparatuses start playing a multimedia file according to the curPlayTime. During a synchronous playing process, a play system clock notification message including curPlayTime is periodically transmitted to the multimedia apparatuses, and the curPlayTime is obtained from curSysTick. In response to the synchronous playing server receiving a synchronous play late message from one of the multimedia apparatuses during the synchronous playing process, the synchronous playing server adjusts the current play system clock from curSysTick to curSysTick - latetime according to the latetime included in the message. In response to the synchronous playing server receiving a synchronous play pause message from one of the multimedia apparatuses, the synchronous playing server records pausedTime as the play pause time, and treats the pausedTime as curPlayTime, and records a play pause system clock pausedTick. In response to the synchronous playing server receiving a synchronous play enable message from one of the multimedia apparatuses, the synchronous playing server records a current play system clock curSysTick, and calculates a play time after the enable curPlayTime = pausedTick - startPlayTick, according to the recorded play pause system clock pausedTick and the play start system clock startPlayTick. In response to the synchronous playing server receiving a synchronous skip message which includes a synchronous skip time skiptime from one of the multimedia apparatuses. In response to a determination that the multimedia apparatuses do not currently skip, the synchronous playing server adjusts a current play time from curPlayTime to curPlayTime + skiptime, and transmits the message to all of the multimedia apparatuses so that the multimedia apparatuses skip from the current play time curPlayTime to curPlayTime + skiptime to play. In response to the synchronous playing server receiving a fast-forward and rewind message including FF or REW speed trickspeed from one of the plurality of multimedia apparatuses during the synchronous playing process, the synchronous playing server determines whether the multimedia apparatuses is currently fast-forwarding or rewinding. in response to the multimedia apparatuses currently fast-forwarding or rewinding, the synchronous playing server sets a next play speed nextPlaySpeed as trickspeed. In response to the multimedia apparatuses not currently fast-forwarding or rewinding, the synchronous playing server transmits the FF and REW message to all of the multimedia apparatuses and sets a current play speed curPlaySpeed as trickspeed. In response to the synchronous playing server receiving a skip completion message from all of the multimedia apparatuses, the synchronous playing server determines whether curPlaySpeed is consistent with nextPlaySpeed. In response to a determination that curPlaySpeed is consistent with nextPlaySpeed, the synchronous playing server transmits a skip completion response message to all of the multimedia apparatuses. In response to a determination that curPlaySpeed is not consistent with nextPlaySpeed, the synchronous playing server firstly transmits a next play speed notification message nextPlaySpeed = trickspeed to all of the multimedia apparatuses and then transmits the skip completion response message thereto. In response to the synchronous playing server receiving a synchronous play stop message from one of the multimedia apparatuses, the synchronous playing server transmits the message to the respective multimedia apparatuses.

FIG. 10 is a block diagram of the multimedia apparatus according to an exemplary embodiment. As shown therein, the multimedia apparatus includes a synchronous connection module 101 and a synchronous playing module 102. The synchronous connection module 101 is connected to the synchronous playing server, and after being successfully connected thereto, transmits a connection completion message to the synchronous playing module 102.

After receiving the connection completion message from the synchronous connection module 101, the synchronous playing module 102 transmits a play start request message to the synchronous playing server. In response to the synchronous playing module 102 receiving a play start clock message from the synchronous playing server, the synchronous playing server starts synchronously playing a multimedia file according to curPlayTime of the play start clock message. In response to there being any audio late or video late according to the curPlayTime that is periodically transmitted by the synchronous playing server during the synchronous playing process, the synchronous playing module 102 transmits a synchronous play late message to the synchronous playing server. As the message includes latetime, the synchronous playing server may adjust a current play system clock from curSysTick to curSysTick - latetime. In response to the playing being paused during the synchronous playing process, a synchronous playing pause message is transmitted to the synchronous playing server. In response to a determination that curPlayTime included in the play system clock notification message that is periodically transmitted by the synchronous playing server is always pausedTime, the playing is paused. In response to a determination that the multimedia apparatus is enabled, a synchronous play enable message is transmitted to the synchronous playing server. In response to curPlayTime of a play system clock notification message that is periodically transmitted by the synchronous playing server sequentially increasing from pausedTick - startPlayTick, the multimedia apparatus starts playing a multimedia file again. In response to the skipping being performed during the synchronous playing process, the synchronous playing module 102 transmits a synchronous skip message, which includes a synchronous skip time skiptime, to the synchronous playing server. In response to the multimedia apparatus receiving the synchronous skip message from the synchronous playing server, the multimedia apparatus skips from a current play time curPlayTime to curPlayTime+skiptime and plays. In response to the multimedia apparatus fast-forwarding or rewinding during the synchronous playing process, the multimedia apparatus transmits a fast-forward or rewind message including FF or REW speed trickspeed to the synchronous playing server and after completing a one-time skipping forward or backward, transmits a skip end message to the synchronous playing server and stands by for blocking. In response to the multimedia apparatus receiving a skip end response message from the synchronous playing server, the multimedia apparatus skips forward. In response to the multimedia apparatus stopping play during the synchronous playing process, the multimedia apparatus transmits a synchronous play stop message to the synchronous playing server. In response to the multimedia apparatus not receiving a play system clock notification message that is periodically transmitted by the synchronous playing server during the synchronous playing process, the multimedia apparatus logs out of the playing process. In response to the multimedia apparatus being rebooted to play, it skips forward according to a current play time curPlayTime that is newly transmitted by the synchronous playing server. A length of the skip time is curPlayTime + a, and after the skip is completed, the multimedia apparatus compares its current play time curPlayTime1 and a current play time curPlayTime of the synchronous playing server. In response to curPlayTime1 + 10≤curPlayTime2, the multimedia apparatus skips forward. In response to the length of the skip time being curPlayTime + a seconds, and after the skip is completed, the multimedia apparatus compares its current play time curPlayTime1 and a current play time curPlayTime of the synchronous playing server. In response to curPlayTime1 < curPlayTime < curPlayTime1 + 10, the multimedia apparatus transmits a synchronous play late message to the synchronous playing server. The latetime of the message equals curPlayTime2 - curPlayTime1. In response to curPlayTime1≥curPlayTime, the multimedia apparatus stands by for curPlayTime1 - curPlayTime2 and then plays again, where a is a default value.

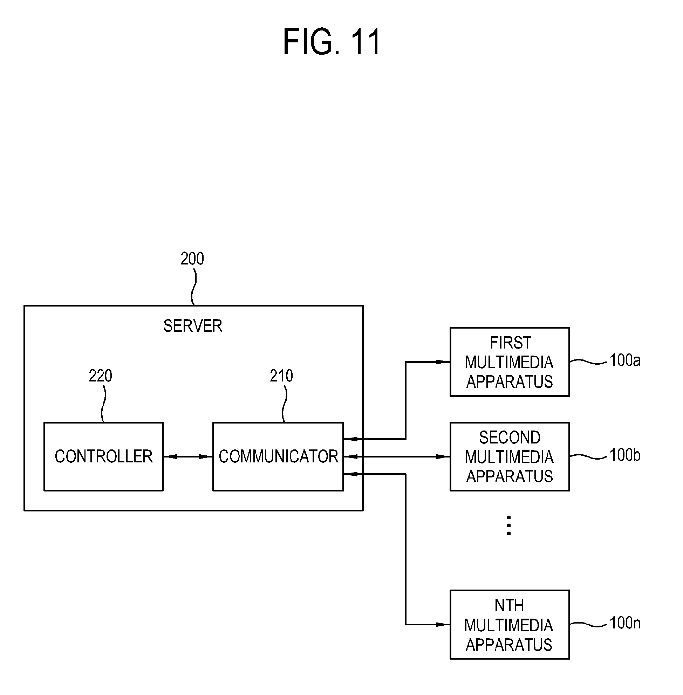

Hereinafter, the exemplary embodiments shown in FIGS. 1 to 10 will be explained with reference to FIGS. 11 to 14. The explanation made with reference to FIGS. 1 to 10 may also apply to FIGS. 11 to 14.

FIG. 11 is a block diagram of a server according to an exemplary embodiment. The configuration shown in FIG. 11 may be explained in connection with the configuration shown in FIG. 9. As shown in FIG. 11, a server 200 may include a communicator 210 and a controller 220, and may be connected to multimedia apparatuses 100a, 100b,... 100n.

The communicator 210 is connected to the plurality of multimedia apparatuses 100a, 100b,... 100n.

The controller 220 receives a request for starting playing a multimedia content from one of the plurality of multimedia apparatuses 100a, 100b,... 100n, and may include a synchronous connection module 91 as shown in FIG. 9. The controller 220 determines synchronization information necessary for synchronously playing a multimedia content by the plurality of multimedia apparatuses 100a, 100b,... 100n based on a system clock of the server 200, and transmits the determined synchronization information which corresponds to the system clock to the plurality of multimedia apparatuses 100a, 100b,... 100n. The server 200 may include a synchronous play processing module 92 to determine and transmit the synchronization information as shown in FIG. 9.

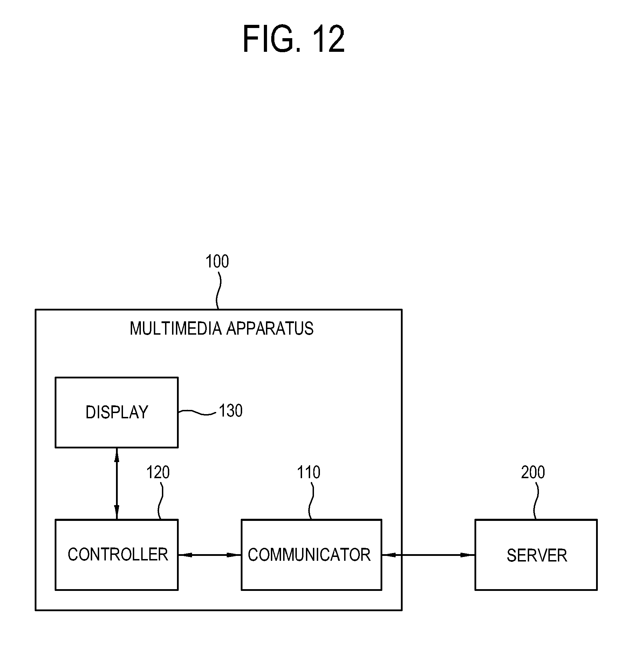

FIG. 12 is a block diagram of a multimedia apparatus according to an exemplary embodiment. The configuration shown in FIG. 12 may be explained in connection with the configuration shown in FIG. 10. As shown in FIG. 12, a multimedia apparatus 100 includes a communicator 110, a controller 120 and a display 130, and may be connected to the server 200.

The communicator 110 is connected to the server 200.

The controller 120 transmits to the server 200 a request to start playing a multimedia content. As shown in FIG. 10, the multimedia apparatus 100 may include a synchronous connection module 101. The controller 120 receives synchronization information for synchronously playing a multimedia content from the server 200 which corresponds to the request to start playing, and synchronously plays the multimedia content based on the received synchronization information. The multimedia apparatus 100 may include a synchronous playing module 102 to receive the synchronization information and synchronously play a multimedia content, as shown in FIG. 10.

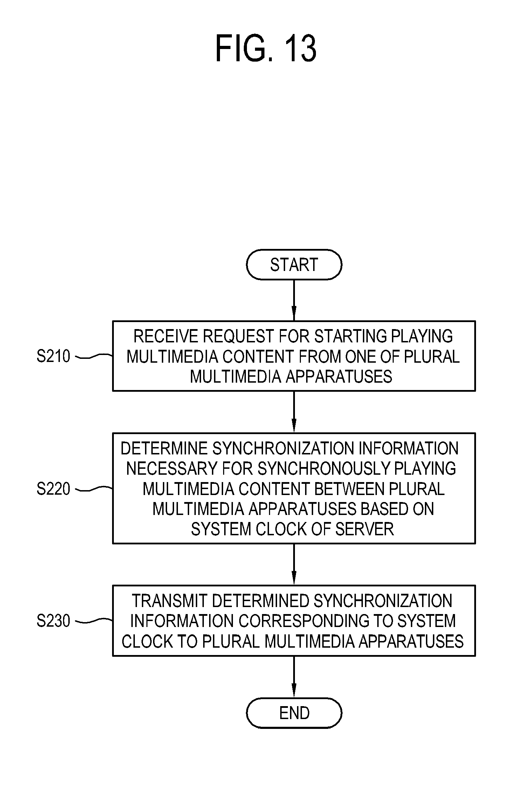

FIG. 13 is a flowchart showing a method of controlling the server, according to an exemplary embodiment. The configuration shown in FIG. 13 may be explained in connection with FIGS. 1 to 8.

The server receives a request for starting play of multimedia content from one of the plurality of multimedia apparatuses (S210). The operation S210 may include the operation 102 as shown in FIG. 1. The synchronization information necessary for synchronously playing the multimedia content between the plurality of multimedia apparatuses is determined on the basis of the system clock of the server (S220). The determined synchronization information which corresponds to the system clock is transmitted to the plurality of multimedia apparatuses (S230). The operation S230 may include the operation 103 as shown in FIG. 1.

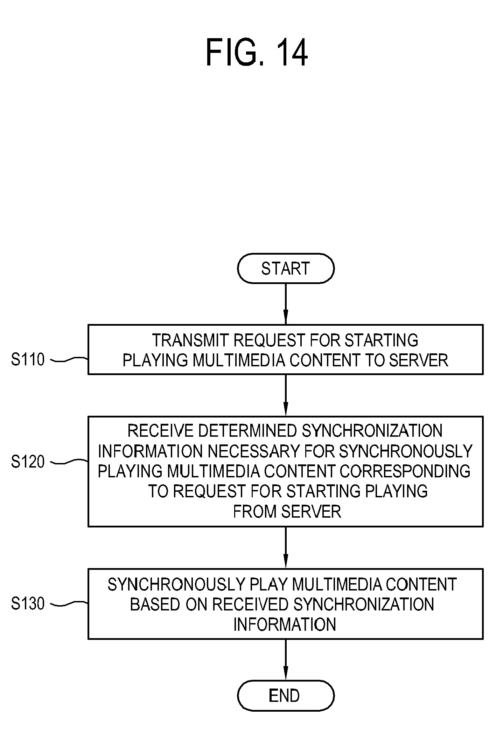

FIG. 14 is a flowchart showing a method of controlling the multimedia apparatus according to an exemplary embodiment. The configuration shown in FIG. 14 may be explained in connection with FIGS. 1 to 8.

A request for starting playing a multimedia content is transmitted to the server (S110). The operation S110 may include the operation 102 as shown in FIG 1. The determined synchronization information necessary for synchronously playing the multimedia content is transmitted by the server which corresponds to the request for starting play (S120). The multimedia content is synchronously played on the basis of the received synchronization information (S130). The operation S130 may include the operation 104 as shown in FIG. 1.

As described above, according to an exemplary embodiment, the multimedia apparatus may improve the degree of accuracy in playing a multimedia content and does not require any additional hardware resources, leading to cost reduction. An exemplary embodiment may be implemented by all multimedia apparatuses such as tablet PCs, smart phones, video walls, etc.

According to an exemplary embodiment, more diverse features and functions may be provided for a home digital television (TV), and an intermediary home digital TV may synchronously play the same video file through a large screen by using the method described herein. This is similar to functions of home theaters and thus provides excellent conditions for playing a high-resolution video.

Further, no significant system load is applied to normal playing apparatuses. For example, in response to a synchronous play of 2, 4, 6 or 8 digital TV being displayed on a video wall to which an exemplary embodiment applies, the maximum CPU usage rate is 18%, the rate of increase in maximum memory usage is 2%, and the maximum synchronous playing error in TVs is less than 5 milliseconds, according to performance related statistics.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A method of controlling a server, the method comprising:
receiving a request to start playing multimedia content from one of a plurality of multimedia apparatuses;
determining synchronization information necessary for synchronously playing the multimedia content between the plurality of multimedia apparatuses, based on a system clock of the server; and
transmitting to the plurality of multimedia apparatuses the determined synchronization information which corresponds to the system clock.

2. The control method according to claim 1, wherein the transmitting the determined synchronization information to the plurality of multimedia apparatuses comprises periodically transmitting the synchronization information that is determined based on the system clock.

3. The control method according to claim 1, further comprising receiving a late time and adjusting the system clock based on the late time, in response to one of the plurality of multimedia apparatuses being late in playing the multimedia content.

4. The control method according to one of claims 1 to 3, further comprising receiving a paused time and adjusting the system clock based on the paused time, in response to one of the plurality of multimedia apparatuses pausing playing the multimedia content.

5. The control method according to one of claims 1 to 4, further comprising receiving a play start time and adjusting the system clock based on the play start time, in response to one of the plurality of multimedia apparatuses starting play of the multimedia content after a pause.

6. The control method according to one of claims 1 to 5, further comprising receiving a skip time and adjusting the system clock based on the skip time in response to one of the plurality of multimedia apparatuses skipping the multimedia content.

7. The control method according to one of claims 1 to 6, further comprising receiving a request for stopping playing and stop playing the multimedia content according to the request, in response to one of the plurality of multimedia apparatuses stopping play of the multimedia content.

8. A server comprising:
a communicator configured to be communicably connected to a plurality of multimedia apparatuses; and
a controller configured to receive a request from one of the plurality of multimedia apparatuses to start playing multimedia content, determine synchronization information necessary for synchronously playing the multimedia content between the plurality of multimedia apparatuses, based on a system clock of the server, and transmit to the plurality of multimedia apparatuses the determined synchronization information which corresponds to the system clock.

9. A method of controlling a multimedia apparatus, the method comprising:
transmitting to the server a request to start playing multimedia content;
receiving from the server synchronization information that is necessary for synchronously playing the multimedia content and determined by the server to correspond to the request to start playing the multimedia content; and
synchronously playing the multimedia content based on the received synchronization information.

10. The control method according to claim 9, wherein the receiving the synchronization information from the server comprises periodically receiving the synchronization information that is determined based on the system clock of the server.

11. The control method according to claim 9, further comprising transmitting a late time to the server in response to the playing of the multimedia content being late.

12. The control method according to one of claims 9 to 11, further comprising transmitting a paused time to the server in response to there being a pause in the playing of the multimedia content.

13. The control method according to one of claims 9 to 12, further comprising transmitting a play start time to the server in response to the multimedia content starting to be played after a pause.

14. The control method according to one of claims 9 to 13, further comprising transmitting a skip time to the server in response to the multimedia content being skipped.

15. A multimedia apparatus comprising:
a communicator configured to be communicably connected to a server; and
a controller configured to transmit to the server a request to start playing multimedia content, receive from the server synchronization information that is necessary for synchronously playing the multimedia content and determined based on the play start request, and synchronously play the multimedia content based on the received synchronization information.
